# EUROPÄISCHE PATENTSCHRIFT

(11) **EP 3 615 284 B1**
(45) Veröffentlichungstag und Bekanntmachung des Hinweises auf die Patenterteilung: **16.08.2023**
(21) Anmeldenummer: 18726714.1
(22) Anmeldetag: 24.04.2018
(51) Int. Cl.: B25J 19/00, B25J 19/06, B25J 13/08

(54) **ERKENNUNG EINER KOLLISION EINES HANDHABUNGSGERÄTS MIT EINEM HINDERNIS**
DETECTION OF A COLLISION OF A HANDLING DEVICE WITH AN OBSTACLE
RECONNAISSANCE D'UNE COLLISION D'UN APPAREIL DE MANIPULATION AVEC UN OBSTACLE

(30) Priorität: 24.04.2017 AT 1662017
(43) Veröffentlichungstag der Anmeldung: 04.03.2020
(73) Patentinhaber: Blue Danube Robotics GmbH, 1220 Wien (AT)
(72) Erfinder: BALDINGER, Andreas, 1040 Wien (AT); FERNER, Tobias, 1120 Wien (AT); WOHLKINGER, Walter, 1020 Wien (AT); ZILLICH, Michael, 1080 Wien (AT)
(74) Vertreter: Keschmann, Marc
(86) Internationale Anmeldenummer: PCT/AT2018/000031
(87) Internationale Veröffentlichungsnummer: WO 2018/195570

(56) Entgegenhaltungen:
- EP-A1- 1 810 795
- WO-A1-2016/000005
- DE-A1-102006 044 071
- DE-A1-102007 062 245
- DE-A1-102015 005 799

## Beschreibung

Die Erfindung betrifft eine Vorrichtung zur Erkennung einer Kollision eines Handhabungsgeräts mit einem Hindernis, umfassend wenigstens eine gasgefüllte Kammer, die von einer flexiblen, durch Kollision mit einem Hindernis verformbaren Hülle umgeben ist und eine flexible Stützstruktur aufweist, wobei die Stützstruktur ein Dämpfungselement ausbildet, welches gemeinsam mit der Hülle die bei einer Kollision einwirkenden Kräfte mechanisch dämpft, und weiters umfassend einen Drucksensor zur Messung des Gasdrucks im Inneren der Kammer, wobei die Kammer, die Hülle, die Stützstruktur und der Drucksensor einen Sensorkörper ausbilden, der wenigstens einen ersten und einen zweiten Bereich aufweist, die einen ersten bzw. zweiten Bereich des Handhabungsgeräts abdeckend am Handhabungsgerät anbringbar sind.

Die Erfindung betrifft weiters ein Verfahren zur Herstellung einer solchen Vorrichtung.

Die Erfindung betrifft außerdem ein Handhabungsgerät mit einer wenigstens einen ersten und einen zweiten Bereich desselben abdeckenden Kollisionserkennungsvorrichtung der oben genannten Art, wobei das Handhabungsgerät eine Notabschaltung aufweist, die in Abhängigkeit von den Signalen des Drucksensors aktivierbar ist.

Eine Vorrichtung der eingangs genannten Art ist beispielsweise in der WO 2016/000005 A1 beschrieben und dient als taktiler Sicherheits-Sensor zum Schutz von Personen und ortsfesten oder autonom bewegten Hindernissen vor ortsfesten oder autonom bewegten Handhabungsgeräten, insbesondere Industrieroboter, wie z.B. Fertigungs-, Transport-, Inspektions- oder Servicerobotern und ihren Manipulatoren. Zur Kollisionserkennung wird der Sicherheits-Sensor oder eine Mehrzahl solcher Sicherheits-Sensoren am Handhabungsgerät und/oder an deren Manipulatoren angebracht. Der in der WO 2016/000005 A1 beschriebene Sicherheits-Sensor umfasst im wesentlichen eine luftdichte Hülle, die eine gas- oder luftgefüllte Kammer umschließt, und einen innenliegenden barometrischen Drucksensor. Die Form der Hülle wird durch eine nachgiebige Stützstruktur gehalten, wobei die Stützstruktur und die Hülle gemeinsam den Körper des Sensors bilden. Die Stützstruktur sorgt hierbei für Formstabilität und eine mechanische Dämpfung der bei einer Kollision einwirkenden Kräfte. Eine Berührung des Sensors führt zu einer Verformung der Hülle und damit zu einer Komprimierung der Kammer samt Stützstruktur, was wiederum zu einem messbaren Druckanstieg im Inneren der Hülle führt. Ein Druckanstieg über einen gewissen Schwellwert führt zum Stopp des zu sichernden Handhabungsgeräts, auf dessen Oberfläche der Sensor befestigt ist.

Bei dem in der WO 2016/000005 A1 beschriebenen Sicherheits-Sensor verfügt jeder Sensor über eine eigene Druckerhöhungsvorrichtung, mit welcher ein vorgegebener Innendruck in der Sensorkammer eingestellt und gehalten werden kann. Der Überdruck innerhalb der Sensorkammer dient der Dichtheitsprüfung der Hülle. Sollte die Hülle durch Beschädigung undicht werden und somit der Sicherheits-Sensor nicht mehr ordnungsgemäß funktionieren können, würde dies durch Entweichen des Überdrucks angezeigt, und zu einem entsprechenden Notsignal des Sicherheits-Sensors führen. Weiters kann die Dämpfungseigenschaft eines Sicherheits-Sensors neben der Materialwahl der nachgiebigen Stützstruktur auch zu einem gewissen Grad durch die Höhe des Innendrucks eingestellt werden.

Ein Schutzelement mit luftmatratzenförmiger, gewölbter Kontur ist der EP 1 810 795 A1 zu entnehmen.

Es hat sich jedoch herausgestellt, dass die im Stand der Technik vorgesehene homogene Stützstruktur zusammen mit einem einstellbaren Innendruck nicht immer eine ausreichende Einstellung der Dämpfungseigenschaft im gesamten Bereich der Vorrichtung gewährleistet. Die vorliegende Erfindung zielt daher darauf ab, das Ansprechverhalten des Sensors besser an die Sicherheitsanforderungen des zu sichernden Arbeitsprozesses bzw. der zu sichernden Maschine anzupassen und gleichzeitig den Herstellungsprozess des Sensors zu vereinfachen.

Zur Lösung dieser Aufgabe besteht die Erfindung bei einer Vorrichtung der eingangs genannten Art im Wesentlichen darin, dass die Hülle und die Stützstruktur miteinander einstückig ausgebildet sind und im ersten und im zweiten Bereich des Sensorkörpers einen voneinander verschiedenen Dämpfungsgrad bereitstellen. Dadurch, dass die Hülle und die Stützstruktur miteinander einstückig ausgebildet sind, können die Hülle und die Stützstruktur in einfacher Weise als einheitlicher Körper ausgebildet werden, wobei insbesondere neuartige und an die jeweiligen Erfordernisse angepasste Raumgebilde für die Stützstruktur geschaffen werden können. Die einstückige Ausführung gelingt gemäß der Erfindung dadurch, dass die Hülle und die Stützstruktur durch ein generatives Fertigungsverfahren, insbesondere schichtweise, wie z.B. durch selektives Lasersintern, hergestellt sind. Generative Fertigungsverfahren werden auch als 3D-Druckverfahren bezeichnet und erlauben die Herstellung von Stützstrukturen mit einer hohen geometrischen Komplexität.

Die Verwendung von generativen Fertigungsverfahren erlaubt es in einfacher Weise, die Hülle und die Stützstruktur so auszubilden, dass im ersten und im zweiten Bereich des Sensorkörpers ein voneinander verschiedener Dämpfungsgrad bereitgestellt wird.

Insbesondere können der Aufbau und die Festigkeit der Stützstruktur hierbei lokal jeweils so gewählt werden, dass auf jedem Abschnitt der Oberfläche des Handhabungsgeräts die jeweils erforderliche mechanische Dämpfung erreicht wird. Die erforderliche Dämpfung ergibt sich aus den Sicherheitsanforderungen des zu sichernden Arbeitsprozesses bzw. des zu sichernden Handhabungsgeräts, wie z.B. der Verfahrgeschwindigkeit und der maximal erlaubten Kontaktkraft.

Bevorzugt ist hierbei vorgesehen, dass die Stützstruktur und/oder die Hülle lokal derart verändert ist, dass im ersten und im zweiten Bereich ein voneinander verschiedener Dämpfungsgrad bereitgestellt ist. Die erfindungsgemäße Variation des Dämpfungsgrades kann entweder durch lokale Variation der Ausbildung der Hülle oder durch lokale Variation der Ausbildung der Stützstruktur erfolgen oder es können sowohl die Ausbildung der Hülle als auch die Ausbildung der Stützstruktur lokal variiert werden.

Die Variation des Dämpfungsgrades des aus Stützstruktur und Hülle bestehenden Sensorkörpers kann hierbei bevorzugt innerhalb ein und derselben Sensorkammer erfolgen. Alternativ kann vorgesehen sein, dass mehrere voneinander getrennte Kammern vorgesehen sind, d.h. mehrere aus Stützstruktur und Hülle bestehende Sensorkörper, die voneinander verschiedene Dämpfungsgrade bereitstellen. Die Ausbildung ist hierbei mit Vorteil so getroffen, dass die Vorrichtung wenigstens eine erste gasgefüllte Kammer und eine zweite gasgefüllte Kammer umfasst, deren Hülle und Stützstruktur jeweils miteinander einstückig ausgebildet sind, wobei die Hülle und die Stützstruktur der ersten Kammer einen von der Hülle und der Stützstruktur der zweiten Kammer verschiedenen Dämpfungsgrad bereitstellen.

Die Stützstruktur ist bevorzugt so aufgebaut, dass sie gegenüberliegende Bereiche der Hülle, insbesondere den an der Oberseite der Vorrichtung angeordneten Bereich der Hülle und den an der Unterseite der Vorrichtung angeordneten Bereich der Hülle, miteinander verbindet. Die Stützstruktur ist hierbei so ausgebildet, dass sie die Kammer durchsetzt. Die Oberseite der Vorrichtung bezeichnet hierbei die dem zu sichernden Handhabungsgerät abgewandte Seite und die Unterseite bezeichnet die dem zu sichernden Handhabungsgerät zugewandte Seite der Vorrichtung. Weiters bezeichnet im folgenden "innen" alle Teile innerhalb der luftdichten Hülle und "außen" alle Teile außerhalb der luftdichten Hülle.

Bevorzugt weist die Stützstruktur eine Vielzahl von Stützelementen auf. Die Stützelemente können beispielsweise innerhalb der Kammer ein Raumgitter ausbilden, welches vorzugsweise aus Kuben, Tetraedern oder Oktaederstümpfen aufgebaut oder als Wabengitter ausgebildet ist.

Alternativ oder zusätzlich können die Stützelemente von die Kammer durchsetzenden Stegen und/oder Stäben gebildet sein.

Weiters ist eine Ausbildung möglich, bei der die Stützstruktur eine sich von der Unterseite zur Oberseite der Vorrichtung hin verzweigende Baumstruktur umfasst. Die Baumstruktur umfasst hierbei beispielsweise dicke Stäbe, die sich zur Oberseite des Sensorkörpers hin verzweigen und feiner werden. Dies ermöglicht eine Ausbildung, bei welcher der Anteil des von der Stützstruktur freigelassenen Hohlraums im Bereich der Unterseite der Vorrichtung verhältnismäßig groß ist, wodurch eine Gewichtsersparnis erreicht wird, während im Bereich der Oberseite durch die sich verzweigenden feineren Stäbe eine gut verteilte Stützwirkung erreicht wird.

Die Einstellung des Dämpfungsgrades gelingt in besonders einfacher Weise dadurch, dass die Anzahl der Stützelemente je Volumeneinheit der Kammer im ersten Bereich größer gewählt ist als im zweiten Bereich. Je höher die Anzahl der Stützelemente je Volumeneinheit der Kammer gewählt ist, desto steifer bzw. fester ist die Stützstruktur. Je geringer die Anzahl der Stützelemente je Volumeneinheit der Kammer gewählt ist, desto weicher bzw. flexibler ist die Stützstruktur. Durch Anwendung eines generativen Fertigungsverfahrens kann die räumliche Dichte der Stützelemente in einfacher Weise innerhalb ein und derselben Kammer, d.h. innerhalb ein und desselben aus Hülle und Stützstruktur bestehenden Körpers lokal variiert werden.

Die Stützelemente der Stützstruktur können vorzugsweise abgerundete Verbindungen zueinander und/oder zur Hülle aufweisen, um eine bessere mechanische Stabilität zu gewährleisten. Bei einer abgerundeten Verbindungen gehen die einzelnen Stützelemente über einen Radius ineinander über.

Die lokale Variation des Dämpfungsgrades kann alternativ oder zusätzlich auch durch Veränderung der physikalischen Materialeigenschaften der Stützstruktur erfolgen, insbesondere durch Variation der Steifigkeit des Materials.

Vorzugsweise ist hierbei vorgesehen, dass die Stützstruktur im ersten Bereich aus einem steiferen Material gefertigt ist als im zweiten Bereich.

Die lokale Variation des Dämpfungsgrades kann alternativ oder zusätzlich auch durch entsprechende Veränderung der Dicke der Stützstruktur erreicht werden. Insbesondere kann vorgesehen sein, dass die Stützstruktur im ersten Bereich eine höhere Dicke aufweist als im zweiten Bereich. Als Dicke wird hierbei der Abstand zwischen der Oberseite und der Unterseite des aus Stützstruktur und Hülle bestehenden Sensorkörpers verstanden.

Bei einer Ausführung, bei der die Variation des Dämpfungsgrades durch eine lokale Veränderung der Hülle erfolgt, kann vorgesehen sein, dass die Dicke der Hülle und/oder die Festigkeit der Hülle an der Oberseite der Vorrichtung im ersten Bereich größer gewählt ist als im zweiten Bereich. Die Stützstruktur kann hierbei entweder mit homogenen Dämpfungseigenschaften ausgeführt sein oder es kann eine zusätzliche lokale Beeinflussung des Dämpfungsgrades durch ergänzende lokale Veränderung der Stützstruktur erreicht werden. Im letzteren Fall kann vorgesehen sein, dass der Dämpfungsgrad der Hülle an der Oberseite der Vorrichtung im ersten Bereich größer gewählt ist als im zweiten Bereich und dass der Dämpfungsgrad der Stützstruktur im zweiten Bereich größer gewählt ist als im ersten Bereich.

Insbesondere führt eine dicke bzw. feste Hülle, unter Umständen in Kombination mit einer weichen Stützstruktur, bei Berührung mit einem Hindernis zu einem eher großflächigen Eindrücken des Sensorkörpers. Umgekehrt führt eine dünne bzw. weiche Hülle, unter Umständen in Kombination mit einer festen Stützstruktur, zu einem eher lokalen Eindrücken des Sensorkörpers.

Eine weitere bevorzugte Ausführung sieht vor, dass die Dicke der Hülle und/oder die Festigkeit der Hülle an der Oberseite der Vorrichtung in einem Randbereich der Kammer geringer gewählt ist als in einem zentralen Bereich der Kammer. Der Randbereich kann hierbei ein gekrümmter Bereich sein. Die Dicke der Hülle und/oder die Festigkeit der Hülle kann dabei an der Oberseite der Vorrichtung in einem gekrümmten Bereich der Hülle geringer gewählt sein als in einem ebenen Bereich der Hülle. Dies gewährleistet eine gleichbleibend hohe Sensitivität des Sensors bis zum Randbereich bzw. auch in einem gekrümmten Bereich der Oberseite.

Gemäß einer weiteren bevorzugten Ausführungsform kann vorgesehen sein, dass die Stützstruktur eine Materialverstärkung aufweist, die an der Oberseite der Vorrichtung innenseitig an der Hülle angeordnet ist, wobei die Materialverstärkung vorzugsweise ein wabenartiges Muster aufweist. Beispielsweise können Hülle und Stützstruktur so ausgeführt werden, dass die Stützstruktur aus wenigen Stützelementen, wie z.B. aus Stegen oder Stäben, besteht und die Hülle mittels einer wabenartigen Struktur verstärkt wird. Dies ermöglicht einen hohen Hohlraumanteil, wodurch eine Gewichtsersparnis erreicht wird, bei gleichzeitig hoher Festigkeit.

Wie an sich bekannt, ist bevorzugt vorgesehen, dass jede Kammer eine eigene Druckerhöhungsvorrichtung, vorzugsweise eine insbesondere piezoelektrisch angetriebene Pumpe bzw. ein Gebläse, aufweist. Die Druckerhöhungsvorrichtung ist bevorzugt so angeordnet, dass sie Umgebungsluft in die jeweilige Kammer fördern kann. Bevorzugt wirkt der Drucksensor über eine Steuerschaltung mit der Druckerhöhungsvorrichtung zusammen, um einen vorgegebenen Gasdruck in der Kammer herzustellen und zu halten.

Die Erfindung sieht weiters ein Handhabungsgerät vor, bei dem wenigstens eine erfindungsgemäße Kollisionserkennungsvorrichtung wenigstens einen ersten und einen zweiten Bereich des Handhabungsgeräts abdeckt, wobei das Handhabungsgerät eine Notabschaltung aufweist, die in Abhängigkeit von den Signalen des Drucksensors aktivierbar ist.

Das Handhabungsgerät kann als Industrieroboter, insbesondere als Fertigungs-, Transport-, Inspektions- oder Serviceroboter ausgebildet sein.

Die Erfindung wird nachfolgend anhand von in der Zeichnung schematisch dargestellten Ausführungsbeispielen näher erläutert. In dieser zeigen Fig. 1 eine Kollisionserkennungsvorrichtung nach dem Stand der Technik im Querschnitt, Fig. 2 eine Kollisionserkennungsvorrichtung gemäß der Erfindung, Fig. 3 eine Detailansicht einer ersten Ausbildung der Stützstruktur, Fig. 4 eine Detailansicht einer zweiten Ausbildung der Stützstruktur, Fig. 5 eine Detailansicht einer dritten Ausbildung der Stützstruktur, Fig. 6 eine Detailansicht einer vierten Ausbildung der Stützstruktur, Fig. 7 eine Detailansicht einer fünften Ausbildung der Stützstruktur, Fig. 8 eine Detailansicht einer sechsten Ausbildung der Stützstruktur, Fig. 9a und 9b eine Detailansicht einer siebenten und achten Ausbildung der Stützstruktur, Fig. 10 eine Detailansicht einer neunten Ausbildung der Stützstruktur, Fig. 11 eine Detailansicht einer zehnten Ausbildung der Stützstruktur und Fig. 12 eine Detailansicht einer elften Ausbildung der Stützstruktur.

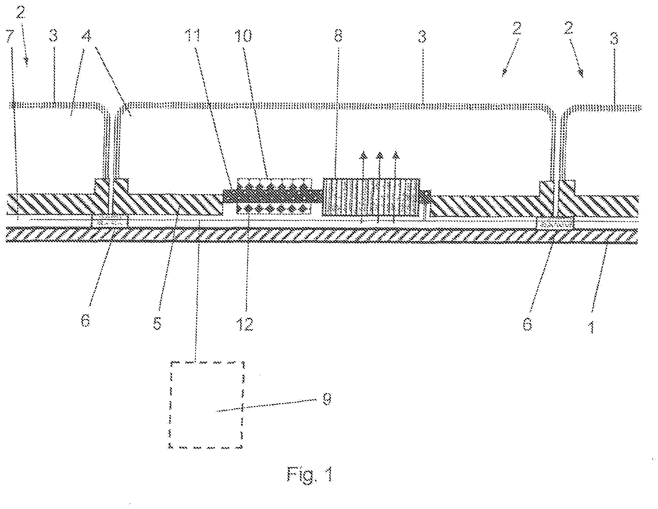

In Fig. 1 ist eine Kollisionsdetektionsvorrichtung gezeigt, die auf der Oberfläche 1 eines Handhabungsgeräts angebracht ist. Die Vorrichtung umfasst mehrere Sensorkörper 2, die jeweils eine von einer Hülle 3 umgebene luftgefüllte Kammer 4 aufweisen. Die Hülle 3 ist an einer Kunststoff-Basisschale 5 befestigt und bildet mit dieser einen luftdichten Verschluss der Kammer 4. Die Basisschale 5 ist unter Zwischenschaltung von Distanzstücken 6 an der Oberfläche 1 des Handhabungsgeräts z.B. mittels einer Klebeverbindung befestigt. Die durch die Distanzstücke 6 erzielte Freistellung erzeugt zwischen der Unterseite des Sensorkörpers 2 und der Oberfläche 1 einen Lufteintritts- und Kabel-Durchtritts-Kanal 7.

Der in der Kammer 4 herrschende Druck wird mit Hilfe einer Druckerhöhungsvorrichtung 8, die Umgebungsluft aus dem Kanal 7 ansaugt und dabei einen durch das Steuergerät 9 einstellbaren Druck im Inneren des Sensorkörpers 2 erzeugt, eingestellt bzw. gehalten. Die Druckerhöhungsvorrichtung 8 ist in einer Ausnehmung der Basisschale 5 aufgenommen. Ebenfalls in der Ausnehmung der Basisschale 5 aufgenommen ist ein Drucksensor 10, der den in der Kammer 4 herrschenden Luftdruck misst. Der innenliegende Drucksensor 10 ist bevorzugt auf einer als Leiterplatte ausgebildeten Trägerplatte 11 befestigt, die außenseitig auch einen Referenz-Drucksensor 12 tragen kann. Bezüglich der Funktionsweise der Kollisionserkennungsvorrichtung wird auf die WO 2016/000005 A1 verwiesen.

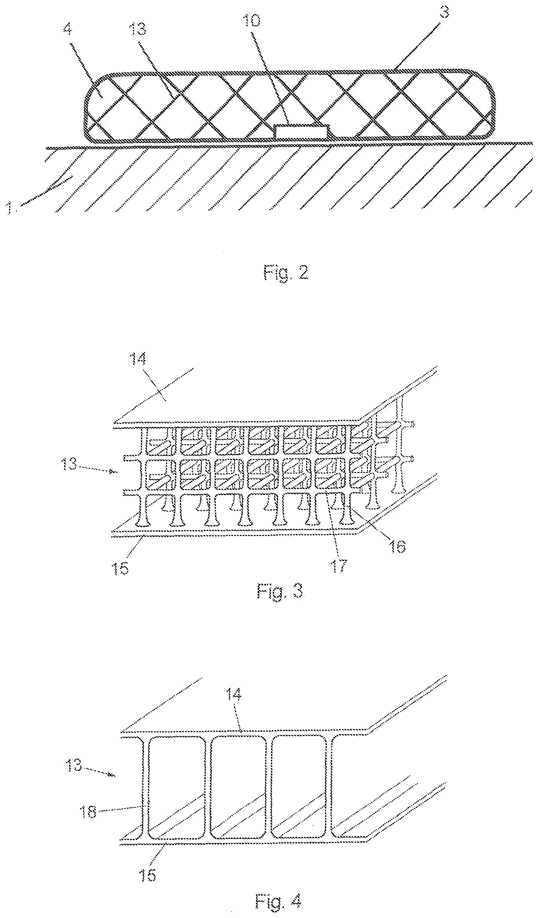

Die erfindungsgemäße Ausbildung, die in Fig. 2 schematisch dargestellt ist, funktioniert analog wie die Ausbildung gemäß Fig. 1, wobei der Sensorkörper 2 jedoch eine in der Kammer 4 angeordnete Stützstruktur 13 aufweist, die in Fig. 2 lediglich mit einer Kreuzschraffur angedeutet ist. Die Hülle 3 ist abweichend von Fig. 1 nicht an einer Basisschale befestigt, sondern umgibt die Kammer 4 vollumfänglich. Weiters sind die Hülle und die Stützstruktur 13 zusammen einstückig ausgebildet, insbesondere mit Hilfe eines generativen, schichtweisen Herstellungsverfahrens gefertigt. Die Leiterplatte 11 samt den Drucksensoren 10 und ggf. 12 kann so aufgebaut sein wie bei der Ausbildung gemäß Fig. 1. Dasselbe gilt für die Druckerhöhungsvorrichtung, die in Fig. 2 der Übersichtlichkeit halber nicht dargestellt ist.

Die nachfolgenden Figuren zeigen verschiedene Ausgestaltungen der Stützstruktur. Fig. 3 zeigt eine Stützstruktur 13, welche den an der Oberseite des Sensorkörpers angeordneten Hüllenbereich 14 mit dem an der Unterseite des Sensorkörpers angeordneten Hüllenbereich 15 verbindet. Fig. 3 zeigt lediglich einen Ausschnitt der Stützstruktur 13, die Stützstruktur 13 verbindet jedoch auch die beiden seitlichen (nicht gezeigten) Bereiche der Hülle 3 miteinander. Die Hülle 3 und die Stützstruktur 13 bestehen aus einem flexiblen Kunststoffmaterial, vorzugsweise aus dem selben Material, und sind mit Hilfe eines generativen Fertigungsverfahrens, insbesondere durch selektives Lasersintern (SLS), in einem Stück aufgebaut worden. Die Stützstruktur 13 besteht im vorliegenden Fall aus einer Vielzahl von einander im rechten Winkel kreuzenden Stäben, wobei eine erste Gruppe von parallelen Stäben 16 die Oberseite mit der Unterseite verbindet und eine zweite Gruppe von parallelen Stäben 17 von einer Seite zur anderen Seite verläuft, sodass ein kubisches Raumgitter vorliegt.

Fig. 4 zeigt eine Stützstruktur 13, welche den an der Oberseite des Sensorkörpers angeordneten Hüllenbereich 14 mit dem an der Unterseite des Sensorkörpers angeordneten Hüllenbereich 15 verbindet und aus parallelen Stegen 18 besteht.

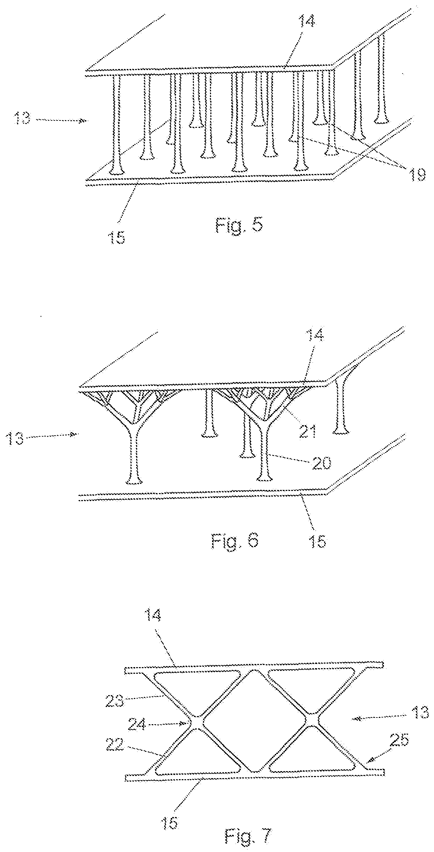

Fig. 5 zeigt eine Stützstruktur 13, welche den an der Oberseite des Sensorkörpers angeordneten Hüllenbereich 14 mit dem an der Unterseite des Sensorkörpers angeordneten Hüllenbereich 15 verbindet und aus parallelen Stäben 19 besteht.

Fig. 6 zeigt eine Stützstruktur 13, welche den an der Oberseite des Sensorkörpers angeordneten Hüllenbereich 14 mit dem an der Unterseite des Sensorkörpers angeordneten Hüllenbereich 15 verbindet und aus einer sich von der Unterseite zur Oberseite hin verzweigende Baumstruktur besteht, wobei sich ein Stammabschnitt 20 in Verzweigungen 21 verzweigt.

Fig. 7 zeigt eine Ausbildung, bei der die Stützstruktur 13 von X-förmig angeordneten Stegen 22 und 23 gebildet ist, wobei im Kreuzungsbereich 24 sowie im Verbindungsbereich 25 der Stege 22 und 23 mit der Hülle 3 bzw. den Hüllenbereichen 14 und 15 ein Radius ausgebildet ist.

Bei den Ausbildungen gemäß den Fig. 3 bis 7 kann der von der Stützstruktur bereitgestellte Dämpfungsgrad lokal variiert werden, indem zum Beispiel die Anzahl der Stützelemente (Stege, Stäbe, Baumstruktur) je Volumeneinheit variiert wird, sodass entweder eine dichtere oder eine weniger dichte Struktur entsteht. Die lokale Variation des Dämpfungsgrades kann aber auch durch die Veränderung der Materialstärke (Dicke) oder der Materialsteifigkeit der jeweiligen Stützelemente vorgenommen werden.

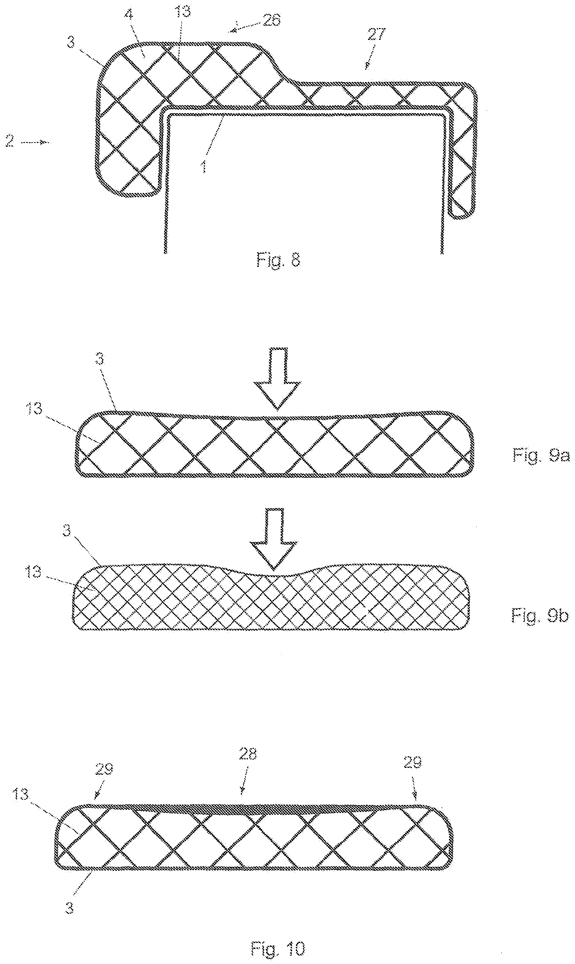

Die lokale Variation des Dämpfungsgrades kann aber auch durch eine Veränderung der zwischen Oberseite und Unterseite gemessenen Dicke erfolgen, wie dies beispielsweise in Fig. 8 dargestellt ist. Fig. 8 zeigt einen Bereich eines Handhabungsgeräts, dessen Oberfläche 1 durch einen Sensorkörper 2 abgedeckt ist. Die Stützstruktur 13 ist in einem ersten Bereich 26 dicker ausgeführt als in einem zweiten Bereich 27.

Fig. 9 zeigt eine Ausbildung, bei der die Wandstärke und/oder Festigkeit der Hülle 3 variiert wird. Insbesondere führt eine dicke/feste Hülle 3, unter Umständen in Kombination mit einer weichen Stützstruktur 13, bei Berührung zu einem eher großflächigen Eindrücken des Sensorkörpers (Fig. 9a). Umgekehrt führt eine dünne/weiche Hülle 3, unter Umständen in Kombination mit einer festen Stützstruktur 13, zu einem eher lokalen Eindrücken des Sensors (Fig. 9b).

Weiters kann, wie dies in Fig. 10 gezeigt ist, die Wandstärke der Hülle 3 in der Mitte 28 der Sensorfläche größer gewählt sein als am Rand 29 der Sensorfläche.

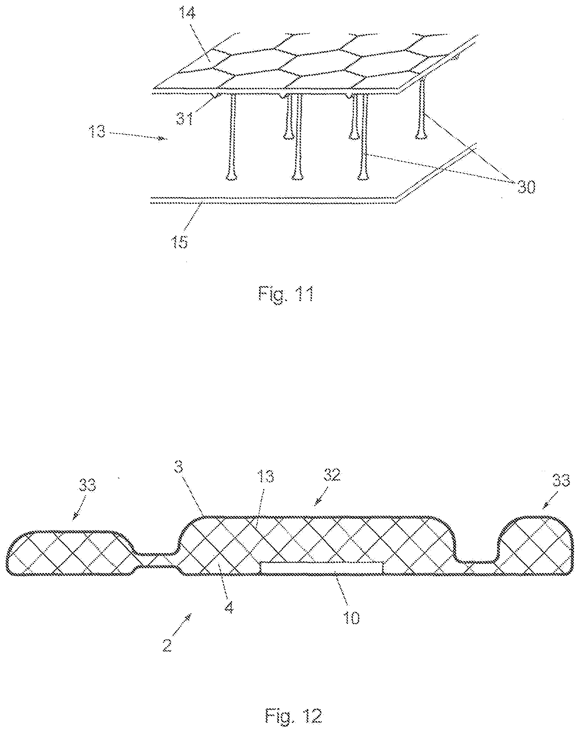

Bei der Ausführung gemäß Fig. 11 umfasst die Stützstruktur eine geringere Anzahl an Stützelementen 30, wie z.B. Stegen oder Stäben, welche den an der Oberseite des Sensorkörpers angeordneten Hüllenbereich 14 mit dem an der Unterseite des Sensorkörpers angeordneten Hüllenbereich 15 verbinden, wobei eine zusätzliche Stützwirkung durch eine am oberseiteigen Hüllenbereich 14 angeformte Verstärkungsstruktur 31 erreicht wird, welche ein Wabenmuster ausbildet. Dies ermöglicht einen großen Hohlraumanteil, und somit eine Gewichtserparnis, bei gleichzeitig hoher Festigkeit.

Wie in Fig. 12 dargestellt, kann der Sensorkörper 2 eine mehrmalige Dickenvariation aufweisen, wobei die Kammer 4 einen zentralen Bereich 32 und zwei seitliche Bereiche 33 umfasst, die durch schlauchartige Verbindungen miteinander verbunden sind. Hierbei beinhaltet nur der zentrale Bereich 32 den Drucksensor 10 samt Elektronik.

## Patentansprüche

1. Vorrichtung zur Erkennung einer Kollision eines Handhabungsgeräts mit einem Hindernis, umfassend wenigstens eine gasgefüllte Kammer (4), die von einer flexiblen, durch Kollision mit einem Hindernis verformbaren Hülle (3) umgeben ist und eine flexible Stützstruktur (13) aufweist, wobei die Stützstruktur (13) ein Dämpfungselement ausbildet, welches gemeinsam mit der Hülle (3) die bei einer Kollision einwirkenden Kräfte mechanisch dämpft, und weiters umfassend einen Drucksensor (10) zur Messung des Gasdrucks im Inneren der Kammer, wobei die Kammer (4), die Hülle (3), die Stützstruktur (13) und der Drucksensor (10) einen Sensorkörper ausbilden, der wenigstens einen ersten und einen zweiten Bereich aufweist, die einen ersten bzw. zweiten Bereich des Handhabungsgeräts abdeckend am Handhabungsgerät anbringbar sind, **dadurch gekennzeichnet, dass** die Hülle (3) und die Stützstruktur (13) miteinander einstückig ausgebildet sind und im ersten und im zweiten Bereich des Sensorkörpers einen voneinander verschiedenen Dämpfungsgrad bereitstellen, wobei die Hülle (3) und die Stützstruktur (13) durch ein generatives Fertigungsverfahren, insbesondere schichtweise, wie z.B. durch selektives Lasersintern, hergestellt sind.

2. Vorrichtung nach Anspruch 1, **dadurch gekennzeichnet, dass** die Stützstruktur (13) und/oder die Hülle (3) lokal derart verändert ist, dass im ersten und im zweiten Bereich ein voneinander verschiedener Dämpfungsgrad bereitgestellt ist.

3. Vorrichtung nach Anspruch 1 oder 2, **dadurch gekennzeichnet, dass** die Vorrichtung wenigstens eine erste gasgefüllte Kammer (4) und eine zweite gasgefüllte Kammer (4) umfasst, deren Hülle (3) und Stützstruktur (13) jeweils miteinander einstückig ausgebildet sind, wobei die Hülle (3) und die Stützstruktur (13) der ersten Kammer (4) einen von der Hülle (3) und der Stützstruktur (13) der zweiten Kammer (4) verschiedenen Dämpfungsgrad bereitstellen.

4. Vorrichtung nach Anspruch 1, 2 oder 3, **dadurch gekennzeichnet, dass** die Stützstruktur (13) gegenüberliegende Bereiche der Hülle (3), insbesondere den an der Oberseite der Vorrichtung angeordneten Bereich der Hülle (3) und den an der Unterseite der Vorrichtung angeordneten Bereich der Hülle (3), miteinander verbindet.

5. Vorrichtung nach einem der Ansprüche 1 bis 4, **dadurch gekennzeichnet, dass** die Stützstruktur (13) eine Vielzahl von Stützelementen (30) aufweist.

6. Vorrichtung nach Anspruch 5, **dadurch gekennzeichnet, dass** die Stützelemente (30) ein Raumgitter ausbilden, welches vorzugsweise aus Kuben, Tetraedern oder Oktaederstümpfen aufgebaut oder als Wabengitter ausgebildet ist.

7. Vorrichtung nach Anspruch 5, **dadurch gekennzeichnet, dass** die Stützelemente (3) von die Kammer (4) durchsetzenden Stegen und/oder Stäben gebildet sind.

8. Vorrichtung nach einem der Ansprüche 1 bis 7, **dadurch gekennzeichnet, dass** die Stützstruktur (13) eine sich von der Unterseite zur Oberseite der Vorrichtung hin verzweigende Baumstruktur umfasst.

9. Vorrichtung nach einem der Ansprüche 5 bis 8, **dadurch gekennzeichnet, dass** die Anzahl der Stützelemente (30) je Volumeneinheit der Kammer (4) im ersten Bereich größer gewählt ist als im zweiten Bereich.

10. Vorrichtung nach einem der Ansprüche 1 bis 9, **dadurch gekennzeichnet, dass** die Stützstruktur (13) im ersten Bereich aus einem steiferen Material gefertigt ist als im zweiten Bereich.

11. Vorrichtung nach einem der Ansprüche 1 bis 10, **dadurch gekennzeichnet, dass** die Stützstruktur (13) im ersten Bereich eine höhere Dicke aufweist als im zweiten Bereich.

12. Vorrichtung nach einem der Ansprüche 1 bis 11, **dadurch gekennzeichnet, dass** die Dicke der Hülle (3) und/oder die Festigkeit der Hülle (3) an der Oberseite der Vorrichtung im ersten Bereich größer gewählt ist als im zweiten Bereich.

13. Vorrichtung nach einem der Ansprüche 1 bis 12, **dadurch gekennzeichnet, dass** der Dämpfungsgrad der Hülle (3) an der Oberseite der Vorrichtung im ersten Bereich größer gewählt ist als im zweiten Bereich und dass der Dämpfungsgrad der Stützstruktur (13) im zweiten Bereich größer gewählt ist als im ersten Bereich.

14. Vorrichtung nach einem der Ansprüche 1 bis 13, **dadurch gekennzeichnet, dass** die Dicke der Hülle (3) und/oder die Festigkeit der Hülle (3) an der Oberseite der Vorrichtung in einem Randbereich der Kammer (4) geringer gewählt ist als in einem zentralen Bereich.

15. Vorrichtung nach einem der Ansprüche 1 bis 14, **dadurch gekennzeichnet, dass** die Dicke der Hülle (3) und/oder die Festigkeit der Hülle (3) an der Oberseite der Vorrichtung in einem gekrümmten Bereich der Hülle (3) geringer gewählt ist als in einem ebenen Bereich der Hülle (3).

16. Vorrichtung nach einem der Ansprüche 1 bis 15, **dadurch gekennzeichnet, dass** die Stützstruktur (13) eine Materialverstärkung aufweist, die an der Oberseite der Vorrichtung innenseitig an der Hülle (3) angeordnet ist, wobei die Materialverstärkung vorzugsweise ein wabenartiges Muster aufweist.

17. Vorrichtung nach einem der Ansprüche 1 bis 16, **dadurch gekennzeichnet, dass** jede Kammer (4) eine eigene Druckerhöhungsvorrichtung (8), vorzugsweise eine insbesondere piezoelektrisch angetriebene Pumpe bzw. ein Gebläse, aufweist.

18. Vorrichtung nach einem der Ansprüche 1 bis 17, **dadurch gekennzeichnet, dass** der Drucksensor (10) über eine Steuerschaltung mit der Druckerhöhungsvorrichtung (8) zusammenwirkt, um einen vorgegebenen Gasdruck in der Kammer (4) herzustellen und zu halten.

19. Handhabungsgerät mit einer wenigstens einen ersten und einen zweiten Bereich desselben abdeckenden Kollisionserkennungsvorrichtung nach einem der Ansprüche 1 bis 18, wobei das Handhabungsgerät eine Notabschaltung aufweist, die in Abhängigkeit von den Signalen des Drucksensors (10) aktivierbar ist.

20. Verfahren zur Herstellung einer Vorrichtung nach einem der Ansprüche 1 bis 18, **dadurch gekennzeichnet, dass** die Hülle (3) und die Stützstruktur (13) miteinander einstückig mit Hilfe eines generatives Fertigungsverfahrens, insbesondere schichtweise, wie z.B. durch selektives Lasersintern, ausgebildet werden.

## Claims

1. A device for detecting a collision of a handling device with an obstacle, comprising at least one gas-filled chamber (4), which is surrounded by a flexible shell (3) being deformable by collision with an obstacle and comprising a flexible support structure (13), wherein the support structure (13) forms a damping element, which together with the shell (3) mechanically damps the forces acting during a collision, and further comprising a pressure sensor (10) for measuring the gas pressure inside the chamber, wherein the chamber (4), the shell (3), the support structure (13) and the pressure sensor (10) form a sensor body, which at least comprises a first and a second region, which are attachable to the handling device so as to cover a first or a second region of the handling device, **characterized in that** the shell (3) and the support structure (13) are integrally formed with each other and provide a mutually different degree of damping in the first and in the second region of the sensor body, wherein the shell (3) and the support structure (13) are manufactured by a generative manufacturing process, in particular in layers, such as, e.g., by selective laser sintering.

2. A device according to claim 1, **characterized in that** the support structure (13) and/or the shell (3) is locally changed such that in the first and in the second region a different degree of damping is provided.

3. A device according to claim 1 or 2, **characterized in that** the device comprises at least a first gas-filled chamber (4) and a second gas-filled chamber (4) whose shell (3) and support structure (13) are each formed integrally with each other, wherein the shell (3) and the support structure (13) of the first chamber (4) provide a different degree of damping than the shell (3) and support structure (13) of the second chamber (4) .

4. A device according to claim 1, 2 or 3, **characterized in that** the support structure (13) interconnects opposite regions of the shell (3), in particular the region of the shell (3) arranged at the top of the device and the region of the shell (3) arranged at the bottom of the device.

5. A device according to any one of claims 1 to 4, **characterized in that** the support structure (13) comprises a plurality of support elements (30).

6. A device according to claim 5, **characterized in that** the support elements (30) form a space grid, which is preferably constructed of cubes, tetrahedrons or truncated octahedrons or formed as a honeycomb grid.

7. A device according to claim 5, **characterized in that** the support elements (3) are formed by the webs and/or bars that cross the chamber (4).

8. A device according to any one of claims 1 to 7, **characterized in that** the support structure (13) comprises a tree structure that branches from the bottom towards the top of the device.

9. A device according to any one of claims 5 to 8, **characterized in that** the number of support elements (30) per unit volume of the chamber (4) is selected to be greater in the first region than in the second region.

10. A device according to any one of claims 1 to 9, **characterized in that** the support structure (13) is made of stiffer material in the first region than in the second region.

11. A device according to any one of claims 1 to 10, **characterized in that** the support structure (13) has a greater thickness in the first region than in the second region.

12. A device according to any one of claims 1 to 11, **characterized in that** the thickness of the shell (3) and/or the rigidity of the shell (3) at the top of the device is selected to be greater in the first region than in the second region.

13. A device according to any one of claims 1 to 12, **characterized in that** the degree of damping of the shell (3) at the top of the device is selected to be greater in the first region than in the second region and that the degree of damping of the support structure (13) is selected to be greater in the second region than in the first region.

14. A device according to any one of claims 1 to 13, **characterized in that** the thickness of the shell (3) and/or the rigidity of the shell (3) at the top of the device is chosen to be lower in an edge region of the chamber (4) than in a central region.

15. A device according to any one of claims 1 to 14, **characterized in that** the thickness of the shell (3) and/or the rigidity of the shell (3) at the top of the device is selected to be lower in a curved portion of the shell (3) than in a flat region of the shell (3).

16. A device according to any one of claims 1 to 15, **characterized in that** the support structure (13) comprises a material reinforcement, which is arranged on the inside of the shell (3) on the upper side of the device, wherein the material reinforcement preferably has a honeycomb-like pattern.

17. A device according to any one of claims 1 to 16, **characterized in that** each chamber (4) has its own pressureincreasing device (8), preferably a particularly piezoelectrically driven pump or a blower.

18. A device according to any one of claims 1 to 17, **characterized in that** the pressure sensor (10) cooperates with the pressure increasing device (8) via a control circuit to establish and maintain a predetermined gas pressure in the chamber (4).

19. Handling device comprising a collision detection device according to any one of claims 1 to 18 that covers at least a first and a second region of the same, wherein the handling device has an emergency shutdown, which is activated in response to the signals of the pressure sensor (10).

20. Method for producing a device according to any one of claims 1 to 18, **characterized in that** the shell (3) and the support structure (13) are formed integrally with each other by means of a generative manufacturing process, in particular in layers, such as, e.g., by selective laser sintering.

## Revendications

1. Dispositif de détection d'une collision d'un appareil de manipulation avec un obstacle, comprenant au moins une chambre remplie de gaz (4), qui est entourée par une enveloppe (3) flexible pouvant être déformée par une collision avec un obstacle et qui possède une structure de support (13) flexible, la structure de support (13) formant un élément d'amortissement qui, conjointement avec l'enveloppe (3) amortit mécaniquement les forces agissant lors d'une collision, et comprenant en outre un capteur de pression (10) destiné à mesurer la pression du gaz à l'intérieur de la chambre, la chambre (4), l'enveloppe (3), la structure de support (13) et le capteur de pression (10) forment un corps de capteur qui présente au moins une première et une deuxième zone pouvant être fixées à l'appareil de manipulation pour recouvrir une première resp. un deuxième zone de l'appareil de manipulation, **caractérisé en ce que** l'enveloppe (3) et la structure de support (13) sont formées d'une seule pièce l'une avec l'autre et fournissent des degrés d'amortissement mutuellement différents dans les première et deuxième zones du corps de capteur, l'enveloppe (3) et la structure de support (13) étant produits par un procédé de fabrication additive, en particulier en couches, comme par exemple par frittage sélectif au laser.

2. Dispositif selon la revendication 1, **caractérisé en ce que** la structure de support (13) et/ou l'enveloppe (3) est modifiée localement de telle manière que des degrés d'amortissement mutuellement différents sont fournis dans les première et deuxième zones.

3. Dispositif selon la revendication 1 ou 2, **caractérisé en ce que** le dispositif comprend au moins une première chambre remplie de gaz (4) et une deuxième chambre remplie de gaz (4), dont l'enveloppe (3) et la structure de support (13) sont formées à chaque fois d'une seule pièce l'une avec l'autre, l'enveloppe (3) et la structure de support (13) de la première chambre (4) fournissant un degré d'amortissement différent de celui de l'enveloppe (3) et la structure de support (13) de la deuxième chambre (4).

4. Dispositif selon la revendication 1, 2 ou 3, **caractérisé en ce que** la structure de support (13) relie des zones opposées de l'enveloppe (3) entre elles, notamment la zone de l'enveloppe (3) disposée sur la face supérieure du dispositif et la zone de l'enveloppe (3) disposée sur la face inférieure du dispositif.

5. Dispositif selon l'une des revendications 1 bis 4, **caractérisé en ce que** la structure de support (13) comporte une pluralité d'éléments de support (30).

6. Dispositif selon la revendication 5, **caractérisé en ce que** les éléments de support (30) forment un réseau tridimensionnel qui est de préférence construit à partir de cubes, de tétraèdres ou d'octaèdres tronqués, ou qui est conçu comme un réseau en nid d'abeilles.

7. Dispositif selon la revendication 5, **caractérisé en ce que** les éléments de support (3) sont formés par des nervures et/ou des tiges pénétrant dans la chambre (4).

8. Dispositif selon l'une des revendications 1 bis 7, **caractérisé en ce que** la structure de support (13) comprend une arborescence ramifiée du bas vers le haut du dispositif.

9. Dispositif selon l'une des revendications 5 bis 8, **caractérisé en ce que** le nombre d'éléments de support (30) par unité de volume de la chambre (4) est choisi plus grand dans la première zone que dans la deuxième zone.

10. Dispositif selon l'une des revendications 1 bis 9, **caractérisé en ce que** la structure de support (13) est réalisée en un matériau plus rigide dans la première zone que dans la deuxième zone.

11. Dispositif selon l'une des revendications 1 bis 10, **caractérisé en ce que** la structure de support (13) présente une épaisseur plus importante dans la première zone que dans la deuxième zone.

12. Dispositif selon l'une des revendications 1 bis 11, **caractérisé en ce que** l'épaisseur de l'enveloppe (3) et/ou la fermeté de l'enveloppe (3) sur la face supérieure du dispositif est choisie plus importante dans la première zone que dans la deuxième zone.

13. Dispositif selon l'une des revendications 1 bis 12, **caractérisé en ce que** le degré d'amortissement de l'enveloppe (3) sur la face supérieure du dispositif est choisi plus important dans la première zone que dans la deuxième zone et **en ce que** le degré d'amortissement de la structure de support (13) est choisi plus important dans la deuxième zone que la première zone.

14. Dispositif selon l'une des revendications 1 bis 13, **caractérisé en ce que** l'épaisseur de l'enveloppe (3) et/ou la fermeté de l'enveloppe (3) sur la face supérieure du dispositif est choisie plus basse dans une zone de bord de la chambre (4) que dans une zone centrale.

15. Dispositif selon l'une des revendications 1 bis 14, **caractérisé en ce que** l'épaisseur de l'enveloppe (3) et/ou la fermeté de l'enveloppe (3) sur la face supérieure du dispositif est choisie plus basse dans une zone courbe de l'enveloppe (3) que dans une zone plane de l'enveloppe (3).

16. Dispositif selon l'une des revendications 1 bis 15, **caractérisé en ce que** la structure de support (13) comporte un renfort de matière qui est agencé sur la face supérieure du dispositif à l'intérieur de l'enveloppe (3), le renfort de matière ayant de préférence un motif en nid d'abeille.

17. Dispositif selon l'une des revendications 1 bis 16, **caractérisé en ce que** chaque chambre (4) possède son propre dispositif d'augmentation de pression (8), de préférence une pompe, notamment à entraînement piézoélectrique, ou une soufflante.

18. Dispositif selon l'une des revendications 1 bis 17, **caractérisé en ce que** le capteur de pression (10) coopère avec le dispositif d'augmentation de pression (8) par l'intermédiaire d'un circuit de commande pour établir et maintenir une pression de gaz prédéterminée dans la chambre (4).

19. Appareil de manipulation avec un dispositif de détection de collision selon l'une des revendications 1 bis 18 couvrant au moins une première et une deuxième zone de celui-ci, dans lequel l'appareil de manipulation comporte un arrêt d'urgence activable en fonction des signaux du capteur de pression (10).

20. Procédé de réalisation d'un dispositif selon l'une des revendications 1 bis 18, **caractérisé en ce que** l'enveloppe (3) et la structure de support (13) sont produits d'une seule pièce l'une avec l'autre à l'aide d'un procédé de fabrication additive, en particulier en couches, comme par exemple par frittage sélectif au laser.
